(19) Europäisches Patentamt / European Patent Office / Office européen des brevets

(11) EP 2 128 200 B1

# (12) EUROPEAN PATENT SPECIFICATION

(45) Date of publication and mention of the grant of the patent:
**31.12.2014 Bulletin 2015/01**

(21) Application number: **08738742.9**

(22) Date of filing: **24.03.2008**

(51) Int Cl.:
***C08L 81/02*** (2006.01) ***C08K 3/26*** (2006.01)
***C08K 7/14*** (2006.01) ***C08K 9/04*** (2006.01)
***F04D 29/02*** (2006.01)

(86) International application number:
**PCT/JP2008/055403**

(87) International publication number:
**WO 2008/123183 (16.10.2008 Gazette 2008/42)**

## (54) POLYPHENYLENE SULFIDE RESIN COMPOSITION

POLYPHENYLENSULFIDHARZZUSAMMENSETZUNG

COMPOSITION DE RÉSINE DE POLY(SULFURE DE PHÉNYLÈNE)

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.03.2007 JP 2007076405**

(43) Date of publication of application:
**02.12.2009 Bulletin 2009/49**

(73) Proprietor: **Toray Industries, Inc.**
**Tokyo 103-8666 (JP)**

(72) Inventors:
- **KODAMA, Kazumi**
  **Nagoya-shi**
  **Aichi 455-8502 (JP)**
- **SUGATA, Takashi**
  **Nagoya-shi**
  **Aichi 455-8502 (JP)**
- **YAMANAKA, Toru**
  **Nagoya-shi**
  **Aichi 455-8502 (JP)**

(74) Representative: **Schaeberle, Steffen**
**Hoefer & Partner**
**Patentanwälte**
**Pilgersheimer Strasse 20**
**81543 München (DE)**

(56) References cited:
**EP-A1- 1 229 078**
**EP-A2- 1 191 227**
**JP-A- 07 258 543**
**JP-A- 09 151 319**
**US-A- 4 362 480**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 128 200 B1

## Description

TECHNICAL FIELD

The present invention relates to a part of a fuel pump module for vehicle which is obtained by molding a polyphenylene sulfide resin composition excellent in chemicals resistance. In more detail, this invention relates to a part of a fuel pump module for vehicle which is obtained by molding a polyphenylene sulfide resin composition, the injection-molded product of which is small in the dimensional change and weight change caused when it is brought into contact with or immersed in chemicals, above all, vehicle fuel.

BACKGROUND ART

Polyphenylene sulfide resins (hereinafter may be abbreviated as PPS resins) have properties suitable as engineering plastics such as excellent heat resistance, flame resistance, stiffness, dimensional properties, chemicals resistance, electric insulation and wet heat resistance, and owing to these properties, the PPS resins are widely used mainly as injection-molded products in such areas as motor vehicles and electronics. In recent years, particularly owing to the excellent chemicals resistance and dimensional properties thereof, the PPS resins are increasingly used also for application to precision parts kept in contact with chemicals. However, especially the PPS resin parts used in contact with vehicle fuel have a problem that if they are brought into contact with the fuel, their dimensions and weight increase since some or all of the components of the PPS resins are affected by the fuel.

As a resin composition comprising a fiber reinforcement and a non-fiber reinforcement with a PPS resin, Patent Document 1 discloses a resin composition comprising glass fibers and calcium carbonate with a PPS resin capable of generating a gas with an NMP content of 2 ppm or less and allowing 0.2wt% or less to be extracted with chloroform therefrom. Further, the document refers to heat treatment in an oxygen atmosphere as a PPS resin post-treatment method, to suggest the possibility of using an oxidatively crosslinked PPS resin. However, the PPS resin composition described in Patent Document 1 is unsatisfactory in the dimensional change and weight change caused when the composition is brought into contact with or immersed in fuel, etc.

Patent Document 2 discloses that a resin composition for injection welding comprising 100 parts by weight of a matrix resin consisting of (a) 20 to 100 wt% of a polyphenylene sulfide resin and (b) 80 to 0 wt% of a nylon resin and (B) 10 to 150 parts by weight of glass fibers is excellent in oil/gasoline resistance. However, the PPS resin composition described in Patent Document 2 is unsatisfactory in the dimensional change and weight change caused when the composition is brought into contact with or immersed in fuel or the like, since the upper limit in the amount of glass fibers is 60 mass%.

Patent Document 3 describes an engine-related mechanism part obtained by molding a resin composition consisting of a polyarylene sulfide resin (hereinafter may be abbreviated as PAS resin) and a fiber reinforcement by a blow molding method. Especially as a preferred PAS resin, disclosed is a PAS resin with a branched or crosslinked structure produced by using a small amount of a monomer with three or more functional groups (branching or crosslinking agent) in polycondensation reaction. However, the document does not describe that an oxidatively crosslinked PPS resin is excellent as an engine-related mechanism part, and the largest amount of the reinforcement mixed in the examples is 45 parts by weight per 100 parts by weight of the PAS resin. Therefore, the PAS resin is unsatisfactory in the dimensional change and weight change caused when the PAS resin is brought into contact with or immersed in fuel, etc.

Patent Documents 4 to 9 respectively describe a resin composition comprising an inorganic reinforcement with a PPS resin or PAS resin specified in the ranges of melt viscosity and non-Newtonian viscosity index. All the resin compositions described in the examples and comparative examples of these patent documents are unsatisfactory in view of the dimensional change and weight change caused when the compositions are brought into contact with or immersed in fuel or the like, since the total amount of the fiber reinforcement and the non-fiber reinforcement is less than 64wt% of the total amount of the PPS resin or PAS resin, fiber reinforcement and non-fiber reinforcement.

Patent Document 1: JP 2004-161834 A

Patent Document 2: JP 10-237305 A

Patent Document 3: JP 05-050493 A

Patent Document 4: JP 11-335653 A

Patent Document 5: JP 03-050265 A

Patent Document 6: JP 04-202364 A

Patent Document 7: JP 08-283576 A

Patent Document 8: JP 08-325453 A

Patent Document 9: JP 09-151319 A

DISCLOSURE OF THE INVENTION

PROBLEM TO BE SOLVED BY THE INVENTION

The problem to be solved by the invention is to provide a part of a fuel pump module for vehicle obtained by molding a PPS resin composition and to enhance the chemicals resistance of the PPS resin composition, more particularly, to decrease the dimensional change and weight change of the injection-molded product of said resin composition caused when the molded product is brought into contact with or immersed in chemicals, above all, fuel.

MEANS FOR SOLVING THE PROBLEM

As described above, it can be expected that the chemicals resistance of a PPS resin can be enhanced by crosslinking the PPS resin or mixing a reinforcement with the PPS resin. However, in this case, the flowability of the resin composition in the molten state may decline. Therefore, required is a resin composition that can have moderate flowability at the time of melt molding and yet is excellent in the resistance against chemicals, above all, fuel. The inventors found that the problem can be solved by using PPS resins different in non-Newtonian viscosity index together.

This invention is as follows:

(1) A part of a fuel pump module for vehicle which is obtained by molding the polyphenylene sulfide resin composition comprising (A) a polyphenylene sulfide resin containing

(a1) an oxidatively crosslinked polyphenylene sulfide resin with a non-Newtonian viscosity index of 1.15 to less than 1.30 and a melt viscosity of 20 Pa·s to less than 40 Pa·s at 300°C and 1216 $second^{-1}$, and

(a2) an oxidatively crosslinked polyphenylene sulfide resin with a non-Newtonian viscosity index of 1.30 to less than 1.45 and a melt viscosity of 40 Pa·s to less than 60 Pa·s at 300°C and 1216 $second^{-1}$,

(B) a fiber reinforcement and (C) a non-fiber reinforcement.

(2) A part of a fuel pump module for vehicle which is obtained by molding the polyphenylene sulfide resin composition, according to (1), wherein the amounts of the polyphenylene sulfide resin (A), the fiber reinforcement (B) and the non-fiber reinforcement (C) are such that the total amount of (B) and (C) is 65 mass% to 80 mass% with the total amount of (A), (B) and (C) as 100 mass%.

(3) A part of a fuel pump module for vehicle which is obtained by molding the polyphenylene sulfide resin composition, according to (1) or (2), wherein the ratio by mass of the amount of the oxidatively crosslinked polyphenylene sulfide resin (a1) to the total amount of the oxidatively crosslinked polyphenylene sulfide resin (a1) and the oxidatively crosslinked polyphenylene sulfide resin (a2) [(a1)/{(a1) + (a2)}] is 0.25 to 0.90.

(4) A part of a fuel pump module for vehicle which is obtained by molding the polyphenylene sulfide resin composition, according to any one of (1) through (3), wherein the fiber reinforcement (B) is glass fibers treated by a surface treating agent containing an epoxy compound.

(5) A part of a fuel pump module for vehicle which is obtained by molding the polyphenylene sulfide resin composition, according to any one of (1) through (4), wherein the non-fiber reinforcement (C) is calcium carbonate, the 50% particle size of which is 3.0 μm or less.

(6) A part of a fuel pump module for vehicle which is obtained by molding the polyphenylene sulfide resin composition, according to any one of (1) through (5), wherein the amount of organic ingredients other than the polyphenylene sulfide resin (A) contained in the polyphenylene sulfide resin composition is 0.3 part by mass or less per 100 parts

by mass in total of (A), (B) and (C).

(7) Further described but not a part of the invention is a molded product obtained by molding the polyphenylene sulfide resin composition as set forth in any one of (1) through (6).

(8) The invention concerns a molded product, according to (7), which is a part of a fuel pump module for a vehicle.

EFFECT OF THE INVENTION

The PPS resin composition used in this invention is excellent in chemicals resistance, more particularly, the injection-molded product of said resin composition can be kept small in the dimensional change and weight change caused when the molded product is brought into contact with or immersed in chemicals, above all, fuel.

BRIEF DESCRIPTION OF THE DRAWINGS

[Fig. 1] is a drawing showing the form of a molded product used in the examples for measuring the amount of dimensional change and the amount of weight change; (a) is a top view, and (b) is a side view.
[Fig. 2] is a schematic drawing of a fuel pump module relating to this invention.
[Fig. 3] is a drawing showing the form of a molded product used in the examples for measuring the dimensional change rate of an outlet cover; (a) is a front view, and (b) is a bottom view.

MEANINGS OF SYMBOLS

1. Molded product
2. Position at which the amount of dimensional change is measured
3. Impeller
4. Outlet cover
5. Inlet cover
6. Brush holder
7. Impeller case
8. Position at which the dimensional change rate of an outlet cover is measured

THE BEST MODES FOR CARRYING OUT THE INVENTION

(1) PPS resin

The PPS resin is a polymer containing 70 mol% or more, preferably 90 mol% or more of the recurring units represented by the following structural formula

[Chemical formula 1]

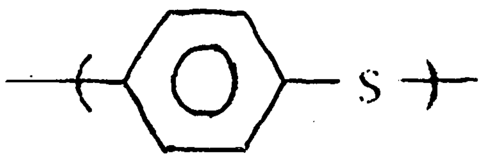

It is not preferred that the amount of the abovementioned recurring units is less than 70 mol%, since heat resistance is impaired. Meanwhile, the recurring units represented by the following structural formulae

[Chemical formulae 2]

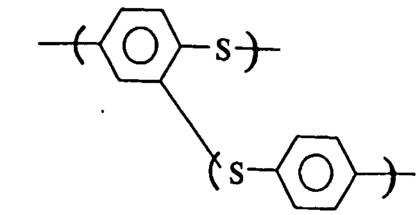
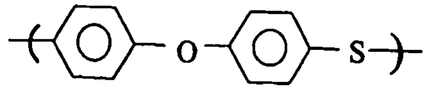
、
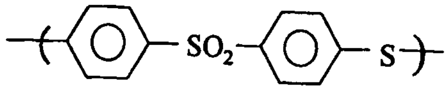
、
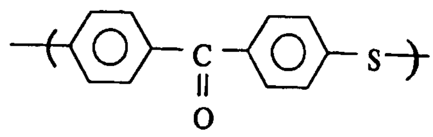

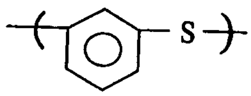
、
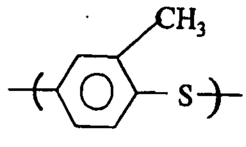
、
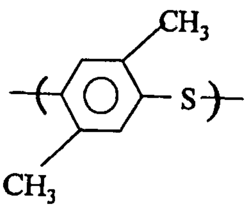

and the like can account for less than 30 mol% of all the recurring units constituting the PPS resin.

Such a PPS resin can be produced by a publicly known ordinary method such as the method for obtaining a polymer with a relatively low molecular weight described in JP 45-3368 B or the method for obtaining a polymer with a relatively high molecular weight described in JP 52-12240 B and JP 61-7332 A. The PPS resin obtained like this is often further treated variously, for example, washed with an organic solvent, hot water or acid aqueous solution, etc. or activated with an acid anhydride, amine, isocyanate or functional group-containing compound such as functional group-containing disulfide compound, before it is used.

The non-Newtonian viscosity index of a PPS resin tends to be larger when the molecular weight of the polymer obtained by any of the abovementioned polymerization methods or the like is higher. Further, if the polymer is heated in an atmosphere of an oxidizing gas such as air or oxygen or in an atmosphere of a mixed gas consisting of the aforementioned oxidizing gas and an inert gas such as nitrogen or argon at a predetermined temperature in a heating vessel till a desired melt viscosity is obtained, that is, if a so-called oxidative crosslinking method is applied to the polymer, the non-Newtonian viscosity index tends to be larger. Furthermore, if the oxidative crosslinking time is longer or if the temperature is higher, the viscosity index tends to be larger. The heat treatment temperature in the oxidative crosslinking method is usually selected in a range from 170°C to 280°C, preferably 200 to 270°C, and the heat treatment time is usually selected in a range from 0.5 to 100 hours, preferably 2 to 50 hours. If both are controlled appropriately, the intended viscosity level can be obtained. Particular examples of the oxidatively crosslinked PPS resin include PPS resins produced by Toray Industries, Inc. such as M3102, M2900, M2100, M1900, L2520 and L2120.

As the PPS resin (A) used in this invention, an oxidatively crosslinked PPS resin with a non-Newtonian viscosity index of 1.15 to 1.30 and a melt viscosity of 20 Pa·s to 40 Pa·s at 300°C and 1216 $second^{-1}$ (a1) and an oxidatively crosslinked PPS resin with a non-Newtonian viscosity index of 1.30 to 1.45 and a melt viscosity of 40 Pa·s to 60 Pa·s at 300°C and 1216 $second^{-1}$ (a2) are used together. If the PPS resins are used together, they serve, in good balance, to achieve the inhibition of dimensional change and weight change when the PPS resin composition is brought into contact with or immersed in chemicals such as fuel, and simultaneously maintain the melt flowability of the resin composition during injection.

In the case where a resin with a non-Newtonian viscosity index of less than 1.15 is used, the molded product obtained from the resin composition will suffer significant dimensional change and weight change when the molded product is brought into contact with or immersed in chemicals such as fuel, etc.

The heat treatment temperature of the oxidative crosslinking method for obtaining an oxidative crosslinked PPS resin with a non-Newtonian index of 1.15 to 1.30 and a melt viscosity of 20 Pa·s to 40 Pa·s at 300°C and 1216 $second^{-1}$ (a1) is usually selected in a range from 170°C to 240°C, preferably 190 to 240°C, and the heat treatment time is usually selected in a range from 0.5 to 100 hours, preferably 2 to 20 hours. If both are controlled appropriately, the intended viscosity level can be obtained.

Further, the heat treatment temperature of the oxidative crosslinking method for obtaining an oxidatively

crosslinked PPS resin with a non-Newtonian viscosity index of 1.30 to 1.45 and a melt viscosity of 40 Pa·s to 60 Pa·s at 300°C and 1216 second$^{-1}$ (a2) is usually selected in a range from 200°C to 270°C, preferably 210 to 260°C, and the heat treatment time is usually selected in a range from 0.5 to 100 hours, preferably 5 to 50 hours. If both are controlled appropriately, the intended viscosity level can be obtained.

The non-Newtonian viscosity index is a value obtained by measuring the shear rate and shear stress at conditions of 300°C and L/D = 40 using a capillograph and calculating from the following formula (1).

$$SR = K \cdot SS^N \qquad (1)$$

{where N is a non-Newtonian index; SR is a shear rate (second$^{-1}$); SS is a shear stress (dynes/cm$^2$); and K is a constant}

It is preferred that the ratio by mass of (a1) to the total of (a1) and (a2) [(a1)/{(a1) + (a2)}] is 0.25 to 0.90. A more preferred range is 0.30 to 0.70.

Further, if the PPS resin (A) contains an oxidatively crosslinked PPS resin with a non-Newtonian viscosity index of 1.15 to less than 1.30 and a melt viscosity of 20 Pa·s to less than 40 Pa·s at 300°C and 1216 second$^{-1}$ (a1) and an oxidatively crosslinked PPS resin with a non-Newtonian viscosity of 1.30 to less than 1.45 and a melt viscosity of 40 Pa·s to less than 60 Pa·s at 300°C and 1216 second$^{-1}$ (a2), other PPS resins may also be contained to such an extent that the object of this invention is not spoiled.

(2) Fiber reinforcement

The fiber reinforcement (B) is not especially limited, and examples of the fiber reinforcement (B) include glass fibers, glass milled fibers, wollastonite fibers, potassium titanate whiskers, calcium carbonate whiskers, zinc oxide whiskers, aluminum borate whiskers, alumina fibers, silicon carbide fibers, ceramic fibers, asbestos fibers, gypsum fibers, etc. Among them, glass fibers are preferred. Further, the fiber reinforcement can also be hollow, and two or more fiber reinforcements can also be used together. The fiber reinforcement can also be, as required, treated on the surface by a coupling agent such as an isocyanate-based compound, organic silane-based compound, organic titanate-based compound, organic borane-based compound or epoxy compound. Especially glass fibers treated by a surface treating agent containing an epoxy compound are preferred. As the epoxy compound, γ-glycidoxypropyltriethoxysilane, etc. can be selected. In general, the surface treating agent is applied as an aqueous solution containing an organic surface treating agent, and glass fibers immediately after having been spun are coated with the aqueous surface treating agent solution by 1 to 30 mass% based on the mass of the glass fibers, and subsequently the aqueous surface treating agent solution is dried to deposit 0.01 to 3.0 mass% as the solid content.

(3) Non-fiber reinforcement

The non-fiber reinforcement (C) is not especially limited, and examples of the non-fiber reinforcement include silicates such as wollastonite, zeolite, sericite, kaolin, mica, clay, pyrophyllite, bentonite, asbestos, talc and alumina silicate, metal compounds such as zinc oxide, calcium oxide, alumina, magnesium oxide, magnesium-aluminum oxide, silicon oxide, zirconium oxide, titanium oxide and iron oxide, carbonates such as lithium carbonate, calcium carbonate, magnesium carbonate and dolomite, sulfates such as calcium sulfate and barium sulfate, hydroxides such as magnesium hydroxide, calcium hydroxide and aluminum hydroxide, glass beads, ceramic beads, boron nitride, silicon carbide, silica, etc. Two or more of them can also be used together. In view of the effect of this invention, mechanical properties and easy availability, calcium carbonate and calcium sulfate are preferred. Especially calcium carbonate is more preferred.

Further, it is preferred that the 50% particle size (or median size) of the non-fiber reinforcement measured using a laser diffraction/scattering particle size distribution analyzer is 3.0 μm or less. Calcium carbonate satisfying this condition is suitable as a non-fiber reinforcement. A more preferred 50% particle size is 1.5 μm to 2.5 μm. If the 50% particle size is too large, the effect of inhibiting the dimensional change and weight change caused when the PPS resin composition is brought into contact with or immersed in chemicals such as fuel tends to be small, and if the 50% particle size is too small, poor dispersion may occur in the resin composition as the case may be.

(4) Mixing ratio of fiber reinforcement and non-fiber reinforcement

It is desirable that the total amount of the fiber reinforcement (B) and the non-fiber reinforcement (C) is in a range from 65 mass% to 80 mass% based on the total amount of (A), (B) and (C), and a more desirable range is 67 mass% to 78 mass%. It is not preferred that the amount of (B) and (C) is less than 65 mass%, since the effect of inhibiting the dimensional change and weight change caused when the PPS resin composition is brought into contact with or

immersed in chemicals such as fuel is insufficient, and it is not preferred either that the amount of (B) and (C) is more than 80 mass%, since the workability, mechanical strength and melt flowability of the resin composition during injection greatly decline.

The mass ratio of the fiber reinforcement (B) and the non-fiber reinforcement (C) is not especially limited, but in view of mechanical strength, it is preferred that (B)/{(B) + (C)} is 0.40 to 0.99. A more preferred range is 0.50 to 0.71.

(5) Other additives

To the PPS resin composition used in this invention, ordinary additives such as a silane compound, releasing agent and crystal nucleating agent, and small amounts of other polymers can be added. In the case where these additives are organic materials, it is preferred that the total amount of the organic additives is 0.3 part by mass or less per 100 parts by mass in total of the PPS resin (A), the fiber reinforcement (B) and the non-fiber reinforcement (C). If the amount of the organic additives added is too large, the effect of inhibiting the dimensional change and weight change caused when the PPS resin composition is brought into contact with or immersed in chemicals such as fuel tends to be small.

The silane compound that can be mixed with the PPS resin composition can be any of epoxy silane compounds, aminosilane compounds, ureido silane compounds, isocyanate silane compounds and various others.

Particular examples of the silane compound include epoxy group-containing alkoxysilane compounds such as γ-glycidoxypropyltrimethoxysilane, γ-glycidoxypropyltriethoxysilane and β-(3,4-epoxycyclohexyl)ethyltrimethoxysilane, mercapto group-containing alkoxysilane compounds such as γ-mercaptopropyltrimethoxysilane and γ-mercaptopropyltriethoxysilane, ureido group-containing alkoxysilane compounds such as γ-ureidopropyltriethoxysilane, γ-ureidopropyltrimethoxysilane and γ-(2-ureidoethyl)aminopropyltrimethoxysilane, isocyanato group-containing alkoxysilane compounds such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane and γ-isocyanatopropyltrichlorosilane, amino group-containing alkoxysilane compounds such as γ-(2-aminoethyl)aminopropylmethyldimethoxysilane, γ-(2-aminoethyl)aminopropyltrimethoxysilane and γ-aminopropyltrimethoxysilane, hydroxy group-containing alkoxysilane compounds such as γ-hydroxypropyltrimethoxysilane and γ-hydroxypropyltriethoxysilane, etc. Among them, epoxy group-containing alkoxysilane compounds are desirable.

Examples of the releasing agent include polyolefins such as polyethylene and polypropylene, montanic acid ester waxes, metallic soaps such as lithium stearate and aluminum stearate, fatty acid amide-based polycondensation products such as ethylenediamine-stearic acid polycondensation product and ethylenediamine-stearic acid-sebacic acid polycondensation product, etc.

Examples of the crystal nucleating agent include polyetheretherketone resin, nylon resin, talc, kaolin, etc.

Examples of the other polymers include polyethylene resin, polypropylene resin, polystyrene resin, ABS resin, polyamide resin, polycarbonate resin, polyethylene terephthalate resin, polybutylene terephthalate resin, polyacetal resin, modified polyphenylene ether resin, polysulfone resin, polyallylsulfone resin, polyketone resin, polyetherimide resin, polyarylate resin, liquid crystal polymer, polyethersulfone resin, polyetherketone resin, polythioetherketone resin, polyetheretherketone resin, polyimide resin, polyamideimide resin, polyethylene tetrafluoride resin, thermoplastic resins such as thermoplastic polyurethane resin, polyamide elastomer and polyester elastomer.

Further, ordinary additives, for example, coloration preventing agent such as hypophosphite, plasticizer such as ester-based compound, colorant such as carbon black or graphite, rust preventive, antioxidant, thermal stabilizer, lubricant, ultraviolet light absorber, flame retarder, antistatic agent and foaming agent can also be added.

(6) Mixing of respective ingredients

The mixing method for obtaining the PPS resin composition used in this invention is not especially limited. A typical method comprises the steps of supplying a mixture of raw materials into a publicly known conventional melt-mixer such as a single-screw or double-screw extruder, Banbury mixer, kneader or mixing roll mill, and melt-kneading at a temperature of 280 to 380°C. The order of mixing raw materials is not especially limited. In a preferred method, a double-screw extruder is used, and a mixture consisting of raw materials other than the fiber reinforcement (B) is supplied into a support port near the screw motors of the extruder, to be melted and kneaded. Then, the fiber reinforcement (B) is supplied through the so-called side feed port of the extruder, and melted. The molten resin discharged from the die of the extruder is cut in air by a hot cutter, cooled with water, and dried to obtain pellets. In another preferred method, the molten resin is cut by a strand cutter.

Further, in the case where small amounts of additives are added, the other ingredients can be kneaded and pelletized by any of the above methods, etc., and subsequently, the minor additives preliminarily mixed or without being preliminarily mixed can be added for molding.

(7) Molding and application PPS resin composition

The PPS resin composition used in this invention can be molded by a publicly known thermoplastic resin molding method such as injection molding, extrusion molding, compression molding, blow molding, injection-compression molding, transfer molding or vacuum molding. Among them, injection molding is preferred. The molding conditions for injection molding are not especially limited, if the conditions allow injection molding of a PPS resin composition. However, it is preferred that the mold temperature is 110°C to 160°C. A more preferred range is 120°C to 150°C. If the mold temperature is too low, the crystallization of the PPS resin is insufficient, and the dimensional change caused when fuel is absorbed becomes large. If the mold temperature is too high, it takes a long time for cooling the molded product, to lower the production efficiency.

The PPS resin composition of this invention is **characterized in that** the dimensional change and weight change caused when the resin composition is brought into contact with or immersed in chemicals, above all, vehicle fuel is small. Therefore, it is suitable as parts that can be brought into contact with or immersed in vehicle fuel. Examples of such parts include parts of a fuel pump module for a vehicle, more particularly, impeller, brush holder, outlet cover, inlet cover and impeller case.

EXAMPLES

This invention is explained below in more detail in reference to examples.

Meanwhile, in the following examples and comparative examples, the non-Newtonian viscosity index of a PPS resin, the amounts of dimensional change and weight change of a molded product immersed in fuel, the tensile strength of a molded product and the dimensional change rate of a molded outlet cover were measured according to the following methods.

[Non-Newtonian viscosity index]

A capillograph was used to measure the shear rate and shear stress at conditions of 300°C and L/D = 40, and the non-Newtonian viscosity index was calculated from the abovementioned formula (1). Meanwhile, in the case where the PPS resin (A) was a mixture consisting of two PPS resins, when the non-Newtonian viscosity index of either PPS resin was lower than 1.15, the non-Newtonian index of the mixture was also measured.

[Amount of dimensional change and amount of weight change]

The form of a molded resin product used for measuring the amount of dimensional change and the amount of weight change is shown in Fig. 1. Fig. 1 (a) is a top view and Fig. 1 (b) is a side view. As the dimension, the thickness values at the six positions indicated by symbol 2 were measured and averaged. After the thickness and weight were measured, the molded product was immersed in fuel C (toluene : isooctane = 50 vol% : 50 vol%) : methanol = 85 vol% : 15 vol% (hereinafter may be called the fuel C mixture) in an environment of 80°C and 300 kPa for a predetermined time, and taken out. The fuel C mixture deposited on the surface was removed, and the thickness and weight were measured. The amount of dimensional change refers to the value obtained by subtracting the thickness measured before immersion in the fuel C mixture from the thickness measured after immersion, and the amount of weight change refers to the value obtained by subtracting the weight measured before immersion in the fuel C mixture from the weight measured after immersion.

[Tensile strength]

Tensile test pieces were prepared at a cylinder temperature of 320°C and a mold temperature of 130°C and the tensile strength was measured in a temperature environment of 23°C according to IS0527-1 and ISO527-2.

[Dimensional change rate of molded outlet cover]

The form of the molded outlet cover used for measurement is shown in Fig. 3. Fig. 3 (a) is a front view and Fig. 3 (b) is a bottom view. Eight inner diameter portions indicated by symbol 8 were measured using Nikon's measuring microscope, and averaged. After measuring the inner diameter, the outlet cover was immersed in fuel C (toluene : isooctane = 50 vol% : 50 vol%) : methanol = 85 vol% : 15 vol% in an environment of 80°C and 300 kPa for a predetermined time, and taken out. The fuel C mixture deposited on the surface was removed, and the inner diameter was measured again. The dimensional change rate in percent was obtained by subtracting the inner diameter measured before the immersion in the fuel C mixture from the inner diameter measured after immersion and dividing the difference by the

inner diameter measured before immersion.

[Reference Example 1 (production of PPS)]

Production of PPS-1

PPS resin M3910 (linear type with a non-Newtonian viscosity index of 1.07 and a melt viscosity of 18 Pa·s at 300°C and 1216 second$^{-1}$) produced by Toray Industries, Inc. was placed in a temperature environment of 220°C in a hot air tray dryer for 5 hours, to obtain PPS-1 with a non-Newtonian viscosity index of 1.22 and a melt viscosity of 37 Pa·s at 300°C and 1216 second$^{-1}$.

Production of PPS-2

PPS resin M3910 produced by Toray Industries, Inc. was placed in a temperature environment of 220°C in a hot air tray dryer for 8 hours, to obtain PPS-2 with a non-Newtonian index of 1.35 and a melt viscosity of 46 Pa·s at 300°C and 1216 second$^{-1}$.

Production of PPS-3

PPS resin L4230 (linear type with a non-Newtonian viscosity index of 1.05 and a melt viscosity of 6 Pa·s at 300°C and 1216 second$^{-1}$) produced by Toray Industries, Inc. was placed in a temperature environment of 220°C in a hot air tray dryer for 17 hours, to obtain PPS-3 with a non-Newtonian viscosity index of 1.40 and a melt viscosity of 49 Pa·s at 300°C and 1216 second$^{-1}$.

[Compounds used in the examples and comparative examples]

(A) PPS resins:

(a1) PPS-1
(a2) PPS-2 and PPS-3
(a3) L4230

(B) Fiber reinforcements:

- Glass fibers "EC10-910" (fiber diameter 10 μm) produced by NSG Vetrotex K.K.; the surface treating agent of the fibers does not contain an epoxy compound.
- Glass fibers "T717" (fiber diameter 13 μm) and "T747H" (fiber diameter 10.5 μm) respectively produced by Nippon Electric Glass Co., Ltd.; the surface treating agents of both the fibers contain an epoxy compound.

(C) Non-fiber reinforcements:

- Calcium carbonate: "KSS1000" (50% particle size 4.2 μm) produced by Calfine Co.,·Ltd.
- Calcium carbonate: "ACE25" (50% particle size 1.9 μm) produced by Calfine Co., Ltd.
- Calcium carbonate: "ACE35" (50% particle size 1.2 μm) produced by Calfine Co., Ltd.
- Calcium sulfate: "CAS-20-4" (50% particle size 4.3 μm) produced by United States Gypsum Company

(D1) Other inorganic additives

- Black colorant: Carbon black "MA100" produced by Mitsubishi Chemical Corp.
- Crystal nucleating agent-1: Talc "MICEL-TONE" produced by Hayashi-Kasei Co., Ltd.

(D2) Other organic additives

- Releasing agent-1: Polyethylene powder "7000FP" produced by Mitsui Chemicals, Inc.
- Releasing agent-2: Montanic acid ester wax "Licowax-E" produced by Clariant International Ltd.
- Silane: β-(3,4-epoxycyclohexyl)ethyltrimethoxysilane
- Crystal nucleating agent-2: Polyetheretherketone (powder)

Examples 1 to 3

The abovementioned compounds other than the fiber reinforcement were dry-blended at the rates shown in Table 1, and the mixture of each example was supplied from the screw root of a double-screw extruder set at a cylinder temperature of 320°C, and the fiber reinforcement was supplied through a side feed port into the extruder at the rate shown in Table 1. Both were melt-kneaded for pelletization. The obtained pellets were dried and injection-molded using an injection molding machine at a cylinder temperature of 320°C and a mold temperature of 130°C, to obtain predetermined test pieces for evaluation of properties. The obtained test pieces were used to measure the amount of dimensional change, the amount of weight change, tensile strength and the dimensional change rate of the molded outlet cover according to the methods described before. The results of each example are shown in Table 1.

The resin compositions and molded products obtained as described above in Examples 1 to 3 were small in the amount of dimensional change, the amount of weight change and the dimensional change rate of the molded outlet cover compared with those of the comparative examples described below, and were also good in mechanical property (tensile strength).

Comparative Examples 1 to 18

Dry blending at the rates shown in Table 1 or 2, melt kneading, pelletization, molding and evaluation were performed as described for Examples 1 to 3. The results of each comparative example are shown in Table 1 or 2. Since PPS resins not in conformity with this invention were used, the resin compositions and molded products obtained in the comparative examples were large in the amount of dimensional change, the amount of weight change and the dimensional change rate of the molded outlet cover or low in strength. Further in Comparative Example 3, extrusion workability was poor, and the resin composition discharged from the die of the extruder was fragile, being very deformed as pellets. Therefore, no evaluation was performed.

[Table 1]

Table 1

| | | | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Exmple 8 |
|---|---|---|---|---|---|---|---|---|---|---|---|---|---|
| (A) PPS resin | (a1) PPS-1 | In parts by mass | 22.5 | 12.0 | 10.5 | | 40.0 | 15.0 | | | | | |
| | (a2) PPS-2 | In parts by mass | | | | | | | | 30.0 | | 30.0 | 30.0 |
| | (a2) PPS-3 | In parts by mass | 7.5 | 18.0 | 19.5 | | | | 5.0 | | 30.0 | | |
| | (a3)L4230 | In parts by mass | | | | 30.0 | | | 25.0 | | | | |
| Non-Newtonian viscosity index of the mixture In which the PPS resin (A) contained (a3) | | | - | - | - | - | - | - | 1.10 | - | - | - | - |
| (B) Fiber reinforcement | Glass fibers EC10-910 | In parts by mass | | | | | | | | | | | |
| | Glass fibers T7 17 | In parts by mass | | | | 40.0 | | | | 40.0 | 40.0 | 40.0 | 40.0 |
| | Glass fibers T747H | In parts by mass | 45.0 | 45.0 | 45.0 | | 30.0 | 45.0 | 35.0 | | | | |

(continued)

| | | | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Exmple 8 |
|---|---|---|---|---|---|---|---|---|---|---|---|---|---|
| (C) Non-fiber reinforcement | Calcium carbonate KSS1000 | In parts by mass | | | | 30.0 | | | | 30.0 | 30.0 | 30.0 | 30.0 |
| | Calcium carbonate ACE25 | In parts by mass | 25.0 | 25.0 | 25.0 | | | | | | | | |
| | Calcium carbonate ACE35 | In parts by mass | | | | | | | | | | | |
| | Calcium sulfate CAS-20-4 | In parts by mass | | | | | 30.0 | 40.0 | 35.0 | | | | |
| [(B)+(C)]/[(A)+(B)+(C)] | | Mass% | 70.0 | 70.0 | 70.0 | 70.0 | 60.0 | 85.0 | 70.0 | 70.0 | 70.0 | 70.0 | 70.0 |
| Total amount of (A)+(B)+(C) | | In parts by mass | 100.0 | 100.0 | 100.0 | 100.0 | 100.0 | 100.0 | 100.0 | 100.0 | 100.0 | 100.0 | 100.0 |
| (D1) Other Inorganic additive | Carbon black | In parts by mass | 0.5 | 0.5 | 0.5 | | 0.5 | 0.5 | 0.5 | | | | |
| | Crystal nucleating agent-1 | In parts by mass | 0.5 | 0.5 | 0.5 | | 0.5 | 0.5 | 0.5 | | | | |

(continued)

| | | | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Exmple 8 |
|---|---|---|---|---|---|---|---|---|---|---|---|---|---|
| (D2) Other organic additive | Releasing agent-1 (PE) | In parts by mass | | | | 0.3 | | | | 0.3 | 0.3 | 0.6 | 0.3 |
| | Releasing agent-2 (Licowax) | In parts by mess | | | 0.1 | | | | | | | | |
| | Silane | In parts by mass | | | 0.1 | | | | | | | | |
| | Crystal nucleating agent-2 | In parts by mass | | | | | | | | | | | 0.3 |
| Amount of organic Ingredients other than (A) per 100 parts by mass In total of (A)+(B)+(C) | | In parts by mass | 0.0 | 0.0 | 0.2 | 0.3 | 0.0 | 0.0 | 0.0 | 0.3 | 0.3 | 0.6 | 0.6 |
| Amount of dimensional change | Immersion time 250 hours | µm | 7.4 | 6.5 | 6.8 | 11.4 | 12.7 | Poor extrusion work | 11.2 | 9.4 | 8.8 | 10.4 | 10.0 |
| Amount of weight change | Immersion time 250 hours | mg | 16.3 | 15.3 | 15.5 | 26.0 | 24.3 | | 25.7 | 18.3 | 19.6 | 22.3 | 21.2 |
| Tensile strength | | MPa | 135.0 | 134.0 | 132.0 | 123.0 | 127.0 | | 124.0 | 114.0 | 129.0 | 113.0 | 118.0 |
| Dimensional change rate of molded outlet cover | Immersion time 250 hours | % | 0.034 | 0.030 | 0.032 | 0.056 | 0.060 | | 0.054 | 0.045 | 0.046 | 0.049 | 0.047 |

[Table 2]

Table 2

| | | | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Exanple 18 |
|---|---|---|---|---|---|---|---|---|---|---|---|---|
| (A) PPS resin | (a1) PPS-1 | In parts by mass | 30.0 | 30.0 | 30.0 | 35.0 | 25.0 | 30.0 | 30.0 | 30.0 | | |
| | (a2) PPS-2 | In parts by mass | | | | | | | | | | |
| | (a2) PPS-3 | In parts by mass | | | | | | | | | 24.0 | 150 |
| | (a3) L4230 | In parts by mass | | | | | | | | | 6.0 | 15.0 |
| Non-Newtonian viscosity index of the mixture in which the PPS resin (A) contained (a3) | | | - | - | - | - | - | - | - | - | 1.32 | 1.20 |
| (B) Fiber reinforcement | Glass fibers EC10-910 | In parts by mass | 35.0 | | | | | | | | | |
| | Glass fibers T717 | In parts by mass | | | | | | | | | | |
| | Glass fibers T747H | In parts by mass | | 35.0 | 35.0 | 32.5 | 37.5 | 45.0 | 45.0 | 45.0 | 35.0 | 35.0 |

(continued)

| | | | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Exanple 18 |
|---|---|---|---|---|---|---|---|---|---|---|---|---|
| (C) Non-fiber reinforcement | Calcium carbonate KSS1000 | In parts by mass | 35.0 | 35.0 | | | | 25.0 | | | | |
| | Calcium carbonate ACE25 | In parts by mass | | | | | | | 25.0 | | | |
| | Calcium carbonate ACE35 | In parts by mass | | | | | | | | 25.0 | | |
| | Calcium sulfate CAS-20-4 | In parts by mass | | | 35.0 | 32.5 | 37.5 | | | | 35.0 | 35.0 |
| [(B)+(C)]/(A)+(B)+(C)] | | Mass% | 70.0 | 70.0 | 70.0 | 65.0 | 75.0 | 70.0 | 70.0 | 70.0 | 70.0 | 70.0 |
| Total amount of (A)+(B)+(C) | | In parts by mass | 100.0 | 100.0 | 100.0 | 100.0 | 100.0 | 100.0 | 100.0 | 100.0 | 100.0 | 100.0 |
| (D1) Other inorganic additive | Carbon black | In parts by mass | 0.5 | 0.5 | 0.5 | 0.5 | 0.5 | 0.5 | 0.5 | 0.5 | 0.5 | 0.5 |
| | Crystal nucleating agent-1 | In parts by mass | 0.2 | 0.2 | 0.5 | 0.5 | 0.5 | 0.5 | 0.5 | 0.5 | 0.5 | 0.5 |
| (D2) Other organic additive | Releasing agent-1 | In parts by mass | 0.3 | 0.3 | | | | | | | | |
| | Releasing agent-2 | In parts by mass | | | | | | | | | | |
| | Silane | In parts by mass | | | | | | | | | | |
| | Crystal nucleating agent-2 | In parts by mass | | | | | | | | | | |

(continued)

| | | | Comparative Example 9 | Comparative Example 10 | Comparative Example 11 | Comparative Example 12 | Comparative Example 13 | Comparative Example 14 | Comparative Example 15 | Comparative Example 16 | Comparative Example 17 | Comparative Exanple 18 |
|---|---|---|---|---|---|---|---|---|---|---|---|---|
| Amount of organic ingredients other than (A) per 100 parts by mass in total of (A)+(B)+(C) | | In parts by mass | 0.3 | 0.3 | 0.0 | 0.0 | 0.0 | 0.0 | 0.0 | 0.0 | 0.0 | 0.0 |
| Amount of dimensional change | Immersion time 250 hours | μm | 9.7 | 8.5 | 8.5 | 10.1 | 7.3 | 8.4 | 7.7 | 10.2 | 7.2 | 8.5 |
| Amount of weight change | Immersion time 250 hours | mg | 18.2 | 18.2 | 18.0 | 20.1 | 15.1 | 17.4 | 17.2 | 19.3 | 15.7 | 19.5 |
| Tensile strength | | MPa | 117.0 | 131.0 | 119.0 | 120.0 | 101.0 | 106.0 | 112.0 | 120.0 | 109.0 | 120.0 |
| Dimensional change rate of molded outlet cover | Immersion time 250 hours | % | 0.046 | 0.040 | 0.040 | 0.047 | 0.036 | 0.039 | 0.038 | 0.048 | 0.037 | 0.040 |

INDUSTRIAL APPLICABILITY

The PPS resin composition of this invention has the heat resistance, flame resistance, stiffness, electric insulation and the like peculiar to PPS resins, and yet is especially small in the dimensional change and weight change caused when it is brought into contact with or immersed in chemicals, especially, vehicle fuel. Therefore, the PPS resin composition is suitable for parts used in contact with vehicle fuel.

## Claims

1. A part of a fuel pump module for vehicle, which is obtained by molding the polyphenylene sulfide resin composition comprising (A) a polyphenylene sulfide resin containing

   (a1) an oxidatively crosslinked polyphenylene sulfide resin with a non-Newtonian viscosity index of 1.15 to less than 1.30 and a melt viscosity of 20 Pa·s to less than 40 Pa·s at 300°C and 1216 $second^{-1}$, and
   (a2) an oxidatively crosslinked polyphenylene sulfide resin with a non-Newtonian viscosity index of 1.30 to less than 1.45 and a melt viscosity of 40 Pa·s to less than 60 Pa·s at 300°C and 1216 $second\text{-}^{1}$,

   (B) a fiber reinforcement and (C) a non-fiber reinforcement.

2. A part of a fuel pump module for vehicle, wherein the polyphenylene sulfide resin composition is obtained by molding the polyphenylene sulfide resin composition, according to claim 1, wherein the amounts of the polyphenylene sulfide resin (A), the fiber reinforcement (B) and the non-fiber reinforcement (C) are such that the total amount of (B) and (C) is 65 mass% to 80 mass% with the total amount of (A), (B) and (C) as 100 mass%.

3. A part of a fuel pump module for vehicle, which is obtained by molding the polyphenylene sulfide resin composition, according to claim 1 or 2, wherein the ratio by mass of the amount of the oxidatively crosslinked polyphenylene sulfide resin (a1) to the total amount of the oxidatively crosslinked polyphenylene sulfide resin (a1) and the oxidatively crosslinked polyphenylene sulfide resin (a2) [(a1)/{(a1) + (a2)}] is 0.25 to 0.90.

4. A part of a fuel pump module for vehicle, which is obtained by molding the polyphenylene sulfide resin composition, according to any one of claims 1 through 3, wherein the fiber reinforcement (B) is glass fibers treated by a surface treating agent containing an epoxy compound.

5. A part of a fuel pump module for vehicle, which is obtained by molding the polyphenylene sulfide resin composition, according to any one of claims 1 through 4, wherein the non-fiber reinforcement (C) is calcium carbonate, the 50% particle size of which is 3.0 μm or less.

6. A part of a fuel pump module for vehicle, which is obtained by molding the polyphenylene sulfide resin composition, according to any one of claims 1 through 5, wherein the amount of organic ingredients other than the polyphenylene sulfide resin (A) contained in the polyphenylene sulfide resin composition is 0.3 parts by mass or less per 100 parts by mass in total of (A), (B) and (C).

## Patentansprüche

1. Teil eines Kraftstoffpumpenmoduls für ein Fahrzeug, das durch Formen der Polyphenylensulfidharz-Zusammensetzung (A) erhalten wird, die ein Polyphenylensulfidharz enthält, das (a1) ein oxidativ vernetztes Polyphenylensulfidharz mit einem Nicht-Newtonschen Viskositätsindex von 1,15 bis weniger als 1,30 und eine Schmelzviskosität von 20 Pa · s bis weniger als 40 Pa · s bei 300 °C und 1216 $Sekunden^{-1}$, und (a2) ein oxidativ vernetztes Polyphenylensulfidharz mit einem Nicht-Newtonschen Viskositätsindex von 1,30 bis weniger als 1,45 und einer Schmelzviskosität von 40 Pa · s bis weniger als 60 Pa · s bei 300 °C und 1216 $Sekunden^{-1}$, (B) eine Faserverstärkung und (C) eine Nicht-Faserverstärkung enthält.

2. Teil eines Kraftstoffpumpenmoduls für ein Fahrzeug, wobei die Polyphenylensulfidharz-Zusammensetzung durch Formen der Polyphenylensulfidharz-Zusammensetzung erhalten wird, gemäß Anspruch 1, wobei die Mengen des Polyphenylensulfidharzes (A), der Faserverstärkung (B) und der Nicht-Faserverstärkung (C) derart sind, dass die Gesamtmenge von (B) und (C) 65 Masse% bis 85 Masse% mit der Gesamtmenge von (A), (B) und (C) gleich 100

Masse% ist.

3. Teil eines Kraftstoffpumpenmoduls für ein Fahrzeug, das durch Formen der Polyphenylensulfidharz-Zusammensetzung erhalten wird, gemäß Anspruch 1 oder 2, wobei das Massenverhältnis der Menge des oxidativ vernetzten Polyphenylensulfidharzes (a1) zur Gesamtmenge des oxidativ vernetzten Polyphenylensulfidharzes (a1) und des oxidativ vernetzten Polyphenylensulfidharzes (a2) [(a1)/{(a1) + (a2)}] 0,25 bis 0,90 beträgt.

4. Teil eines Kraftstoffpumpenmoduls für ein Fahrzeug, das durch Formen der Polyphenylensulfidharz-Zusammensetzung erhalten wird, gemäß einem der Ansprüche 1 bis 3, wobei die Faserverstärkung (B) Glasfasern sind, die durch ein Oberflächenbehandlungsmittel behandelt sind, die eine Epoxid-Verbindung enthalten.

5. Teil eines Kraftstoffpumpenmoduls für ein Fahrzeug, das durch Formen der Polyphenylensulfidharz-Zusammensetzung erhalten wird, gemäß einem der Ansprüche 1 bis 4, wobei die nicht-Faserverstärkung (C) Calciumcarbonat ist, dessen 50 Prozent-Partikelgröße 3,0 $\mu$m oder weniger beträgt.

6. Teil eines Kraftstoffpumpenmoduls für ein Fahrzeug, das durch Formen der Polyphenylensulfidharz-Zusammensetzung erhalten wird, gemäß einem der Ansprüche 1 bis 5, wobei die Menge der organischen Bestandteile mit Ausnahme des Polyphenylensulfidharzes (A), die in der Polyphenylensulfidharz-Zusammensetzung enthalten sind, 0,3 Massenteile oder weniger als 100 Massenteile der Summe von (A), (B) und (C) beträgt.

## Revendications

1. Partie d’un module de pompe à carburant pour véhicule, qui est obtenue par moulage de la composition de résine de polysulfure de phénylène comprenant (A) une résine de polysulfure de phénylène contenant

   (a1) une résine de polysulfure de phénylène réticulée par oxydation avec un indice de viscosité non newtonien allant de 1,15 à moins de 1,30 et une viscosité à l’état fondu allant de 20 Pa·s à moins de 40 Pa·s à 300°C et à 1216 secondes$^{-1}$, et
   (a2) une résine de polysulfure de phénylène réticulée par oxydation avec un indice de viscosité non newtonien allant de 1,30 à moins de 1,45 et une viscosité à l’état fondu allant de 40 Pa·s à moins de 60 Pa·s à 300°C et à 1216 secondes$^{-1}$,

   (B) un renfort de fibres et (C) un renfort sans fibres.

2. Partie d’un module de pompe à carburant pour véhicule, dans laquelle la composition de résine de polysulfure de phénylène est obtenue par moulage de la composition de résine de sulfure de polyphénylène, selon la revendication 1, dans laquelle les quantités de la résine de polysulfure de phénylène (A), du renfort de fibres (B) et du renfort sans fibres (C) sont telles que la teneur totale de (B) et (C) est comprise entre 65% en masse et 80% en masse, la teneur totale de (A), (B) et (C) étant de 100% en masse.

3. Partie d’un module de pompe à carburant pour véhicule, qui est obtenue par moulage de la composition de résine de polysulfure de phénylène, selon la revendication 1 ou 2, dans laquelle le rapport en masse de la teneur de la résine de polysulfure de phénylène réticulée par oxydation (a1) sur la teneur totale de la résine de polysulfure de phénylène réticulée par oxydation (a1) et de la résine de polysulfure de phénylène réticulée par oxydation (a2) [(a1)/{(a1)+(a2)}] est compris entre 0,25 et 0,90.

4. Partie d’un module de pompe à carburant pour véhicule, qui est obtenue par moulage de la composition de résine de polysulfure de phénylène, selon l’une quelconque des revendications 1 à 3, dans laquelle le renfort de fibres (B) est constitué des fibres de verre traitées par un agent de traitement de surface contenant un composé époxy.

5. Partie d’un module de pompe à carburant pour véhicule, qui est obtenue par moulage de la composition de résine de polysulfure de phénylène, selon l’une quelconque des revendications 1 à 4, dans laquelle le renfort sans fibres (C) est du carbonate de calcium, dont la taille de 50% des particules est inférieure ou égale à 3,0 $\mu$m.

6. Partie d’un module de pompe à carburant pour véhicule, qui est obtenue par moulage de la composition de résine de polysulfure de phénylène, selon l’une quelconque des revendications 1 à 5, dans laquelle la teneur d’ingrédients organiques autres que la résine de polysulfure de phénylène (A) contenus dans la composition de résine de polysulfure de phénylène est inférieure ou égale à 0,3 parties en masse pour 100 parties en masse au total de (A), (B) et (C).

【fig 1】

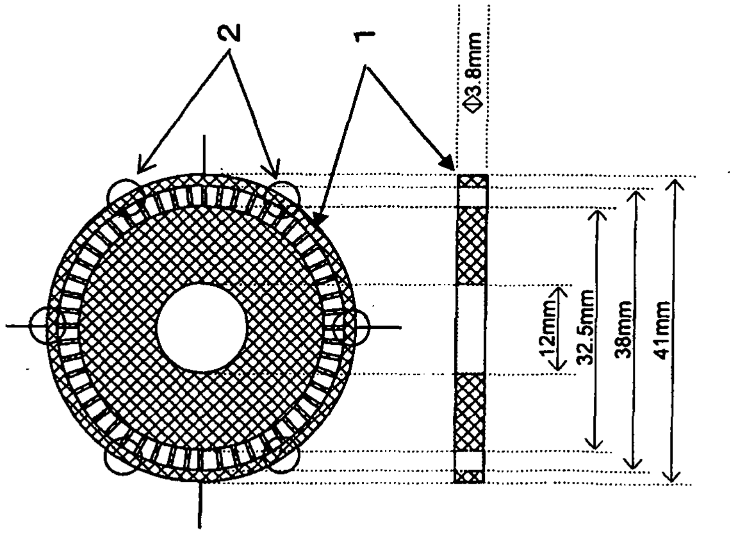


(a)

(b)

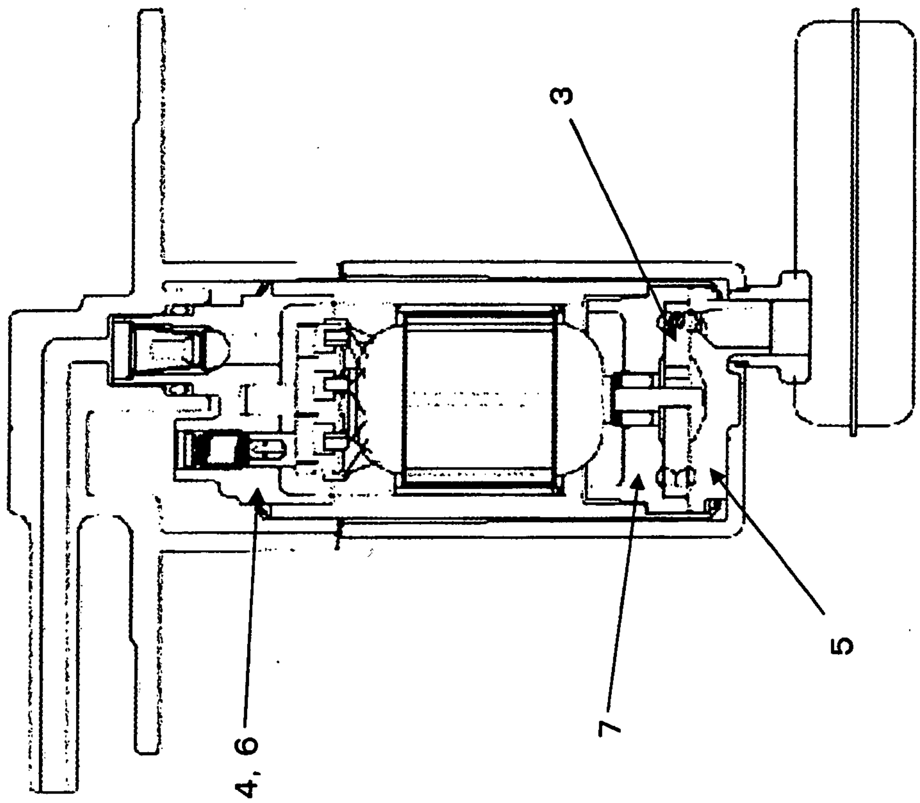


【fig 2】

【fig 3】

(a)

(b)

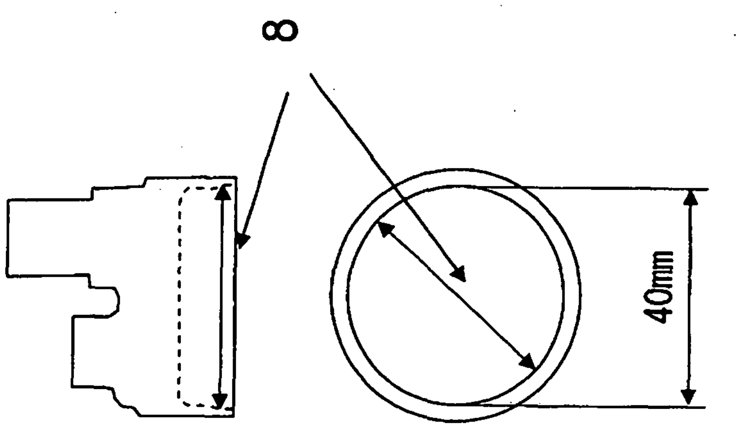

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004161834 A
- JP 10237305 A
- JP 5050493 A
- JP 11335653 A
- JP 3050265 A
- JP 4202364 A
- JP 8283576 A
- JP 8325453 A
- JP 9151319 A
- JP 453368 B
- JP 52012240 B
- JP 61007332 A